# EUROPEAN PATENT APPLICATION

(11) **EP 2 014 694 A1**
(43) Date of publication of application: **14.01.2009**
(21) Application number: 08003874.8
(22) Date of filing: 03.03.2008
(51) Int. Cl.: C08G 59/42, C09D 5/03, C09D 133/06

(54) **Powder clear coating composition**

(30) Priority: 31.05.2007 US 932660 P
(71) Applicant: E.I. DU PONT DE NEMOURS AND COMPANY, Wilmington, DE 19898 (US)
(72) Inventor: Flosbach, Carmen, 42287 Wuppertal (DE); Herm, Michael, 42553 Velbert (DE); Frese, Peter, 84028 Landshut (DE)
(74) Representative: DuPont Performance Coatings Biering/Blum/Kimpel

(57) **Abstract**

A powder clear coating composition with a resin solids content comprising at least one epoxy-functional (meth)acrylic copolymer (A) having an epoxy equivalent weight of 250 to 600 and a carboxyl-functional curing component (B) of dodecanedioic acid (B1) and at least one carboxyl-functional urethane component (B2) having a carboxyl number of 80 to 350 mg of KOH/g, wherein the epoxy groups of the epoxy-functional (meth)acrylic copolymer (A) are in a molar ratio to the carboxyl groups of the carboxyl-functional curing component (B) of 2.5:1 to 0.8:1 and wherein 30 to 75 % of the carboxyl groups provided by the carboxyl-functional curing component (B) are provided by the dodecanedioic acid (B1) and the remainder to make the total up to 100 % by the at least one carboxyl-functional urethane component (B2).

## Description

### Field of the Invention

The invention relates to a powder clear coating composition thermally curable by addition reaction of carboxyl groups and epoxy groups.

### Description of the Prior Art

Powder clear coating compositions thermally curable by addition reaction of carboxyl groups and epoxy groups have been the subject matter of extensive patent literature and are also put to practical use, for example, as an automotive powder clear coating composition for producing the clear coat layer of two-layer topcoats, conventional in the automotive field, consisting of a color- and/or special effect-imparting base coat and a protective, gloss-imparting clear coat thereon. In particular, such powder clear coating compositions are those comprising epoxy-functional (meth)acrylic copolymers as binder and preferably dodecanedioic acid [HO₂C(CH₂)₁₀CO₂H] and/or dodecanedioic acid polyanhydride as carboxyl-functional curing agent (crosslinker, hardener); see, for example, US 5,407,707, US 5,710,214 and WO 98/12268. In automotive powder clear coating compositions based on epoxy-functional (meth)acrylic copolymers as binder, dodecanedioic acid and/or dodecanedioic acid polyanhydride have in practice proven to be the carboxyl-functional curing agent of choice because of the well-balanced range of properties which may be achieved therewith with regard to the requirements of automotive coating; this applies both to the handling and application of such automotive powder clear coating compositions and to the optical and technological properties of the clear coat layers applied thereof and thermally cured.

One disadvantage of the powder clear coating compositions comprising epoxy-functional (meth)acrylic copolymers as binder and dodecanedioic acid and/or dodecanedioic acid polyanhydride as curing agent is that sometimes after a few days or weeks a visually troublesome whitish film may form on clear coat layers applied thereof and thermally cured, which is particularly noticeable in the case of dark color shades. Although this film may be wiped off, for example, by polishing, it may then reform after a few days or weeks. The phenomenon described arises in particular when the clear coat layers have been thermally cured under underbaking conditions which sometimes prevail in industrial paintshops or on such substrate areas which did not receive the prescribed curing temperature at all or not for a sufficiently long period due to the long time they take to heat up.

It has turned out that this troublesome phenomenon may be avoided if some of the dodecanedioic acid and/or of the dodecanedioic acid polyanhydride in powder clear coating compositions comprising epoxy-functional (meth)acrylic copolymers as binder and dodecanedioic acid and/or dodecanedioic acid polyanhydride as curing agent is replaced by a carboxyl-functional urethane component.

### Summary of the Invention

The invention relates to a powder clear coating composition with a resin solids content comprising at least one epoxy-functional (meth)acrylic copolymer (A) having an epoxy equivalent weight of 250 to 600 and a carboxyl-functional curing component (B) of dodecanedioic acid (B1) and at least one carboxyl-functional urethane component (B2) having a carboxyl number of 80 to 350 mg of KOH/g, wherein the epoxy groups of the epoxy-functional (meth)acrylic copolymer (A) are in a molar ratio to the carboxyl groups of the carboxyl-functional curing component (B) of 2.5:1 to 0.8:1 and wherein 30 to 75 % of the carboxyl groups provided by the carboxyl-functional curing component (B) are provided by the dodecanedioic acid (B1) and the remainder to make the total up to 100 % by the at least one carboxyl-functional urethane component (B2).

### Detailed Description of the Embodiments

The description and the claims speak of "dodecanedioic acid (B1)"; this should not however be understood as meaning "dodecanedioic acid" alone but rather as meaning "dodecanedioic acid and/or dodecanedioic acid polyanhydride". In the case of dodecanedioic acid polyanhydride, each anhydride group should be counted as two carboxyl groups. Dodecanedioic acid alone as such is preferred.

The term "(meth)acrylic" is used in the present description and the claims. This means acrylic and/or methacrylic.

The term "epoxy equivalent weight" is used in the present description and the claims in connection with the (meth)acrylic copolymer (A) and means the quantity of (meth)acrylic copolymer (A) in g which contains 1 mol of epoxy groups.

The resin solids content of the powder clear coating composition according to the invention comprises at least one epoxy-functional (meth)acrylic copolymer (A) having an epoxy equivalent weight of 250 to 600. The epoxy-functional (meth)acrylic copolymers (A) are resins which are solid at room temperature and have calculated glass transition temperatures (Tg) of, for example, 30 to 90 °C, preferably of 30 to 70 °C and number-average molar masses (Mn) of, for example, 1000 to 10000, preferably of 1000 to 5000.

The term "calculated glass transition temperature" is used in the description and the claims. It refers to the glass transition temperature (Tg) calculated according to the well-known Fox equation (see, for example, T. Brock, M. Groteklaes and P. Mischke, European Coatings Handbook, 2000, Curt R. Vincentz Verlag, Hannover, pages 43-44; Tg values for homopolymers see, for example, Polymer Handbook, 3rd Edition, 1989, J.Wiley & Sons, New York, page VI-209 and the following).

The number-average molar mass data stated in the presented herein are number-average molar masses determined or to be determined by gel permeation chromatography (GPC; divinylbenzene-cross-linked polystyrene as the immobile phase, tetrahydrofuran as the liquid phase, polystyrene standards).

Examples of epoxy-functional free-radically polymerizable olefinically unsaturated monomers for synthesizing the epoxy-functional (meth)acrylic copolymers (A) are (meth)allyl glycidyl ether, 3,4-epoxy-1-vinylcyclohexane, epoxycyclohexyl (meth)acrylate, and preferably glycidyl (meth)acrylate.

The epoxy-functional (meth)acrylic copolymers (A) contain epoxy-functional monomers incorporated by free-radical polymerization in accordance with the (meth)acrylic copolymers' (A) epoxy equivalent weight of 250 to 600. In addition to the epoxy-functional monomers, the (meth)acrylic copolymers (A) contain at least one comonomer, which is selected in particular from among olefinically unsaturated monomers without reactive functional groups. Examples of such comonomers are monovinyl aromatic compounds, such as, styrene, vinyltoluene, methylstyrene, p-tert.-butylstyrene and vinylnaphthaline; vinyl esters, such as, for example, vinyl acetate, vinyl propionate and vinyl versatate; vinyl ethers, for example, methyl, ethyl and C3-C6-alkyl vinyl ether; (meth)acrylonitrile; (meth)acrylamide; esters and amides of alpha,beta-olefinically unsaturated mono- and dicarboxylic acids, such as, crotonic acid, maleic acid and fumaric acid; in particular, however (meth)acrylates, such as, methyl (meth)acrylate, ethyl (meth)acrylate, propyl (meth)acrylate, isopropyl (meth)acrylate, the isomeric butyl (meth)acrylates, n-pentyl (meth)acrylate, amyl (meth)acrylate, n-hexyl (meth)acrylate, cyclohexyl (meth)acrylate, n-octyl (meth)acrylate, 2-ethylhexyl (meth)acrylate, n-decyl (meth)acrylate, n-dodecyl (meth)acrylate, lauryl (meth)acrylate and isobornyl (meth)acrylate. Comonomers of the olefinically polyunsaturated compound type may be incorporated by free-radical polymerization in small proportions into the epoxy-functional (meth)acrylic copolymers (A); for example, their proportion may amount to 0.01 to 5 wt.%, relative to the total quantity of the olefinically unsaturated monomers to produce the epoxy-functional (meth)acrylic copolymers (A). Examples of such olefinically polyunsaturated comonomers are divinylbenzene, ethanediol di(meth)acrylate, hexanediol di(meth)acrylate and glycerol tri(meth)acrylate.

However, the epoxy-functional (meth)acrylic copolymers (A) may also contain comonomers with functional groups. Examples of such comonomers are in particular those with hydroxyl groups, such as, hydroxyethyl (meth)acrylate and the isomeric hydroxypropyl and hydroxybutyl (meth)acrylates. The epoxy-functional (meth)acrylic copolymers (A) preferably do not contain comonomers with carboxyl groups.

The epoxy-functional (meth)acrylic copolymers (A) may be produced by free-radical copolymerization of the epoxy-functional olefinically unsaturated monomers with the olefinically unsaturated comonomers, for example, by emulsion or suspension polymerization, in particular, by solution or bulk polymerization. Polymerization may be initiated with conventional free-radical initiators, for example, peroxide or azo initiators, and optionally carried out using conventional chain-transfer agents, such as, for example, dimeric alphamethylstyrene or mercapto compounds. These are standard free-radical copolymerization procedures known to the person skilled in the art and do not need to be explained. After copolymerization, the epoxy-functional (meth)acrylic copolymer (A) is isolated as solid resin, for example, by spray drying, freeze drying or, in the case of epoxy-functional (meth)acrylic copolymers (A) produced by solution polymerization, by removal of the organic solvent by distillation.

The resin solids content of the powder clear coating composition according to the invention comprises a carboxyl-functional curing component (B) of dodecanedioic acid (B1) and at least one carboxyl-functional urethane component (B2) having a carboxyl number of 80 to 350 mg of KOH/g. The dodecanedioic acid (B1) provides 30 to 75 % and the at least one carboxyl-functional urethane component (B2) 25 to 70 % of the carboxyl groups provided by the carboxyl-functional curing component (B), the percentages adding up to 100 %.

The urethane components (B2) having a carboxyl number in the range of 80 to 350 mg of KOH/g are solids at room temperature with melting temperatures of, for example, 50 to 120 °C, preferably of 70 to 100 °C. The melting temperatures may be sharp melting points, in particular, in case of carboxyl-functional urethane components (B2a) explained below. In case of carboxyl-functional urethane components (B2b) also explained below they are not in general sharp melting points, but instead the upper end of melting ranges with a breadth of, for example, 30 to 90 °C. The melting ranges and thus their upper end may be determined, for example, by DSC (differential scanning calorimetry) at heating rates of 10 K/min. The number-average molar masses (Mn) of the carboxyl-functional urethane components (B2b) amount, for example, to 500 to 3000.

The above-mentioned carboxyl-functional urethane components (B2a) comprise organic compounds with at least two urethane and at least two carboxyl groups per molecule, which may be produced by the addition of one or more, preferably just one, monohydroxycarboxylic acid onto di- or polyisocyanate.

Examples of monohydroxycarboxylic acids which may be used to produce carboxyl-functional urethane components (B2a) are glycolic acid (hydroxyacetic acid), malic acid, 12-hydroxystearic acid, 4-hydroxybenzoic acid or 1:1-adducts of monoepoxy compounds and dicarboxylic acids, for example, corresponding adducts of glycidyl ethers or glycidyl esters, such as, glycidyl versatate with dicarboxylic acids.

Examples of diisocyanates which may be used to produce carboxyl-functional urethane components (B2a) are aliphatic, cycloaliphatic or araliphatic diisocyanates, such as, 1,6-hexane diisocyanate, dicyclohexylmethane diisocyanate, isophorone diisocyanate, trimethylhexane diisocyanate, cyclohexane diisocyanate, cyclohexanedimethylene diisocyanate and tetramethylenexylylene diisocyanate. Further examples are uretidione dimers derived from said diisocyanates.

Examples of polyisocyanates which may be used to produce carboxyl-functional urethane components (B2a) are trisisocyanatononane, biurets of the diisocyanates stated in the preceding paragraph and isocyanurate trimers of the diisocyanates stated in the preceding paragraph. Isocyanurate trimers derived, for example, from 1,4-cyclohexanedimethylenediisocyanate, in particular, from isophorondiisocyanate and more particularly, from 1,6-hexanediisocyanate, are in particular suitable.

The person skilled in the art selects the type and proportion of the monohydroxycarboxylic acid and the di- or polyisocyanate in such a manner that carboxyl-functional urethane components (B2a) which are solid at room temperature and having carboxyl groups corresponding to a carboxyl number of 80 to 350 mg KOH/g, in particular, of 120 to 350 mg KOH/g are obtained.

The above-mentioned carboxyl-functional urethane components (B2b) are carboxyl-functional polyurethanes.

Methods for the production of carboxyl-functional polyurethanes are known to the person skilled in the art. Carboxyl-functional polyurethanes may, for example, be produced by reacting polyisocyanate(s) and/or diisocyanate(s) [i.e. polyisocyanate(s) or diisocyanate(s) or a combination of polyisocyanate(s) and diisocyanate(s)] with polyol(s) and carboxylic acid(s) with at least one group capable of addition with isocyanate, such as, for example, aminocarboxylic acids and, in particular, hydroxycarboxylic acids. When using carboxylic acids with two or more groups capable of addition with isocyanate, such as, for example, dimethylolpropionic acid or dimethylolbutyric acid, polyurethanes with lateral carboxyl groups may be produced.

Carboxyl-functional polyurethanes in the form of polyurethanes with terminal carboxyl groups are particularly preferred; they may be produced by reacting polyol(s) with polyisocyanate(s) and/or diisocyanate(s) in excess and reacting the excess free isocyanate groups with one or more carboxylic acids with one group capable of addition with isocyanate, such as, for example, monoaminocarboxylic acids and, in particular, monohydroxycarboxylic acids.

Examples of di- and polyisocyanates which may be used to produce carboxyl-functional polyurethanes are the same as were mentioned above as examples in connection with the production of carboxyl-functional urethane components (B2a).

Examples of polyols which may be used to produce carboxyl-functional polyurethanes are diols having hydroxyl groups attached to aliphatic or cycloaliphatic carbon, such as, corresponding telechelic (meth)acrylic polymer diols, polyester diols, polyether diols, polycarbonate diols, each with a number-average molar mass of, for example, up to 800 as representatives of oligomeric or polymeric diols, ethylene glycol, the isomeric propane- and butanediols, 1,5-pentanediol, 1,6-hexanediol, 1,10-decanediol, 1,12-dodecanediol, neopentyl glycol, butylethylpropanediol, the isomeric cyclohexanediols, the isomeric cyclohexanedimethanols, hydrogenated bisphenol A, tricyclodecanedimethanol, and dimer fatty alcohol. Further examples are polyols having three or more hydroxyl groups attached to aliphatic or cycloaliphatic carbon, such as, trimethylolethane, trimethylolpropane, glycerol, pentaerythrite and corresponding polymer polyols, for example, polyester polyols, polycarbonate polyols, polyether polyols and polylactone polyols.

Examples of monohydroxycarboxylic acids which may be used to produce carboxyl-functional polyurethanes, in particular, polyurethanes with terminal carboxyl groups are the same as were mentioned above as examples in connection with the production of carboxyl-functional urethane components (B2a).

A further method for the production of the particularly preferred polyurethanes with terminal carboxyl groups is, for example, to react polyisocyanate(s) and/ or diisocyanates with polyol(s) in excess to obtain hydroxyl-functional polyurethanes and then to react the hydroxyl groups with cyclic carboxylic anhydride(s).

Examples of di- and polyisocyanates which may be used to produce hydroxyl-functional polyurethanes are the same as were mentioned above as examples in connection with the production of carboxyl-functional urethane components (B2a).

Examples of polyols which may be used to produce hydroxyl-functional polyurethanes are the same as were mentioned above as examples in connection with the production of carboxyl-functional polyurethanes.

Once the addition reaction of the polyisocyanate(s) and/or diisocyanate(s) with the polyol(s) is complete, the resultant hydroxyl-functional polyurethanes are reacted with one molecule of cyclic carboxylic anhydride per hydroxyl group and the anhydride is ring-opened.

Preferably, only one cyclic carboxylic anhydride is used. Examples of usable cyclic carboxylic anhydrides are maleic anhydride, succinic anhydride, tetrahydrophthalic anhydride, hexahydrophthalic anhydride, methylhexahydrophthalic anhydride, trimellitic anhydride and pyromellitic anhydride. During the reaction, the hydroxyl groups of the hydroxyl-functional polyurethanes are esterified and the carboxyl groups are formed. Addition of the cyclic carboxylic anhydride and the reaction generally proceed in the temperature range from 90 to 140°C, it being possible to monitor the course of the reaction by determining the carboxyl number. The reaction is complete when the theoretical carboxyl number is reached.

The person skilled in the art selects the type and proportion of the polyisocyanate(s) and/or diisocyanate(s), the polyol(s) and the carboxylic acid(s) with at least one group capable of addition with isocyanate or the polyisocyanate(s) and/or diisocyanate(s), the polyol(s) and the cyclic carboxylic anhydride(s) for the production of the carboxyl-functional polyurethanes in such a manner that polyurethanes which are solid at room temperature and having carboxyl groups corresponding to a carboxyl value of 80 to 350 mg KOH/g are obtained.

The carboxyl-functional polyurethanes may be produced in the presence of a suitable organic solvent (mixture), which, however, makes it necessary to isolate the polyurethanes obtained in this manner or remove the solvent therefrom. Preferably, the production of the carboxyl-functional polyurethanes is, however, carried out without solvent and without subsequent purification operations.

The proportions of the at least one epoxy-functional (meth)acrylic copolymer (A) and the carboxyl-functional curing component (B) within the resin solids content of the powder clear coating composition according to the invention are selected in accordance with a molar ratio of the epoxy groups of the at least one epoxy-functional (meth)acrylic copolymer (A) to the carboxyl groups of the carboxyl-functional curing component (B) of 2.5:1 to 0.8:1. The weight ratio of the at least one epoxy-functional (meth)acrylic copolymer (A) to the carboxyl-functional curing component (B) amounts, for example, to 90:10 to 50:50.

In addition to the at least one epoxy-functional (meth)acrylic copolymer (A) and the carboxyl-functional curing component (B), the resin solids content of the powder clear coating composition according to the invention may comprise further binders (C) and/or curing agents (D) in each case free or substantially free of carboxyl groups in a total quantity of, for example, up to 30 wt.%. Examples of appropriate binders (C) are polymer polyols which are solid at room temperature and may be used as hydroxyl-functional powder coating binders, such as, polyester, polyurethane or poly(meth)acrylate polyols. Examples of appropriate curing agents (D) are blocked polyisocyanates which are solid at room temperature and may be used as curing agents for hydroxyl-functional powder coating binders. The resin solids content of the powder clear coating composition according to the invention preferably consists of the at least one epoxy-functional (meth)acrylic copolymer (A) and the carboxyl-functional curing component (B) and does not comprise any components (C) or (D).

The powder clear coating compositions according to the invention may comprise conventional powder coating additives in conventional quantities of, for example, 0.1 to 5 wt.%, such as, for example, levelling agents; degassing agents, such as, for example, benzoin; antioxidants; light stabilizers; adhesion promoters; catalysts and melt rheology control agents.

The powder clear coating compositions according to the invention may comprise transparent pigments, for example, micronized titanium dioxide, aluminum oxide or silicon dioxide.

The powder clear coating compositions according to the invention may be produced using the conventional methods known to the person skilled in the art (compare Ullmann's Encyclopedia of industrial chemistry, Vol. A 18, page 481, 1991, Verlag Chemie Weinheim), in particular, for example, by extruding the powder clear coating material, which has already been completely formulated by dry mixing of all the required components, in the form of a pasty melt, cooling the melt, performing coarse comminution, fine grinding and then classifying to the desired grain fineness, for example, to average particle sizes (mean particle diameters) of 20 to 90 µm. The average particle sizes may be determined by means of laser diffraction.

The powder clear coating compositions according to the invention are usable for the production of clear coat layers on substrates. To this end the powder clear coating compositions may be applied using conventional methods onto uncoated substrates or onto substrates precoated with one or more coating layers, in particular, by electrostatic spray application. After application, thermal curing takes place, in particular, by baking, for example, at object temperatures of 120 to 200 °C, preferably of 120 to 180 °C.

The powder clear coating compositions according to the invention are preferably used to produce the outer clear coat layer of base coat/clear coat two-layer coatings, in particular, in motor vehicle original coating. In this respect, the invention also relates to a process for producing a base coat/clear coat two-layer coating using a powder clear coating composition according to the invention.

To this end, for example, first of all a base coat layer is spray-applied from a conventional color- and/or special effect-imparting base coat, preferably a water-borne base coat, preferably in a dry film thickness of 8 to 30 µm. Application of the powder clear coating composition preferably proceeds by a dry-on-wet process, i.e. after a flash-off phase, for example, at 20 to 80 °C, the base coat layer is overcoated with a powder clear coating composition according to the invention to a dry film thickness of, for example, 30 to 80 µm and thermally cured, in particular, baked, together with the latter at object temperatures of, for example, 120 to 160 °C.

Base coat/clear coat two-layer coatings produced using the powder clear coating composition according to the invention satisfy the requirements placed upon an automotive coating. The powder clear coating compositions according to the invention may therefore be used in particular in clear top coating of automotive bodies or automotive body parts.

The powder clear coating compositions according to the invention are distinguished by good applicability. The clear coat layers produced therewith and thermally cured are high-gloss, hard and inter alia exhibit good chemical resistance and weathering resistance. Overall, they are distinguished by a range of properties which is comparable to the corresponding powder clear coating compositions formulated with dodecanedioic acid and/or dodecanedioic acid polyanhydride as the only carboxyl-functional curing agent, but avoid the above-described problem of the subsequent formation of a whitish film on the clear coat layers applied thereof and thermally cured.

### Examples

### Comparative Example 1

a) Preparation of a powder clear coating composition:
   729 g of an epoxy-functional methacryl copolymer with an epoxy equivalent weight of 380 and an average molecular weight (Mn) of 2000, 210 g dodecanedioic acid, 30 g of a light protecting agent (1:1-mixture of Tinuvin® 900 (UV-absorber) and Tinuvin® 111 (sterically hindered amine light protecting agent), both from the company Ciba), 3 g benzoin, 6 g of Irganox® B 225 (antioxidant) from the company Ciba and 8 g of Troy® EX 570 (leveling agent) from the company Troy Chemie were first mixed in a dry state and then dispersed at 100 to 120°C by means of an extruder. After cooling off and pre-comminuting of the extrudate the latter was milled in an air separation ball mill to an average particle size (d₅₀) of 20 µm to a powder clear coating composition.
b) Preparation of a base coat/clear coat two-layer coating:
   A black water-borne base coat was applied to a conventional phosphated auto body sheet precoated by cathodic electrodeposition and with primer surfacer by spraying in a dry film thickness of 15 µm. After application, the coating was dried by flashing off at room temperature for 10 minutes, followed by additional heating for 10 minutes at 80 °C. It was then coated over with the powder clear coating composition from Example 1a) in a dry film thickness of 60 µm and bake cured for 30 minutes at 145°C (object temperature). The test specimen showed no change after 10 days storage at room temperature.
c) Example 1b) was repeated with the difference that bake curing was carried out for 30 minutes at 135 °C (object temperature). After 10 days storage at room temperature a whitish film that could be wiped off had formed on the clear coat surface.
d) Example 1b) was repeated with the difference that bake curing was carried out for 15 minutes at 145 °C (object temperature). After 10 days storage at room temperature a whitish film that could be wiped off had formed on the clear coat surface.

### Example 2

a) Preparation of a polyurethane dicarboxylic acid:
   A polyurethane dicarboxylic acid was produced by reacting HDI (1,6-hexane diisocyanate) with 1,3-propanediol and 1,6-hexanediol in a 2 : 2 : 1 molar ratio. The resultant polyurethane diol was then in a second step reacted with the stoichiometric amount of succinic anhydride (one mol of succinic anhydride per mol OH) in accordance with the following synthesis method:
   The 1,3-propanediol and the 1,6-hexanediol were initially introduced into a 2 litre four-necked flask equipped with a stirrer, thermometer and column and 0.01 wt.% dibutyltin dilaurate, relative to the initially introduced quantity of diols, were added. The mixture was heated to 80 °C. HDI was then apportioned and a temperature was maintained so that the hot reaction mixture did not solidify. The reaction mixture was stirred until no free isocyanate could be detected (NCO content < 0.1 %). Thereafter the stoichiometric amount of succinic anhydride was apportioned and a temperature was maintained so that the hot reaction mixture did not solidify. The reaction was performed until the theoretical acid number was reached. The hot melt was then discharged and allowed to cool and solidify.
   The melting behavior of the resultant polyurethane dicarboxylic acid was investigated by means of DSC (differential scanning calorimetry, heating rate 10 K/min); the final temperature of the melting process was 117 °C.
b) Preparation of a carboxyl-functional polyurethane:
   A carboxyl-functional polyurethane was produced by reacting HDI with glycerol and 1,6-hexanediol in a 2 : 1 : 2 molar ratio. The resultant polyurethane polyol was then in a second step reacted with the stoichiometric amount of succinic anhydride (one mol of succinic anhydride per mol OH) in accordance with the following synthesis method:
   Glycerol and 1,6-hexanediol were initially introduced into a 2 litre four-necked flask equipped with a stirrer, thermometer and column and 0.01 wt.% dibutyltin dilaurate, relative to the initially introduced quantity of polyols, were added. The mixture was heated to 80 °C. HDI was then apportioned and a temperature was maintained so that the hot reaction mixture did not solidify. The reaction mixture was stirred until no free isocyanate could be detected (NCO content < 0.1 %). Thereafter the stoichiometric amount of succinic anhydride was apportioned and a temperature was maintained so that the hot reaction mixture did not solidify. The reaction was performed until the theoretical acid number was reached. The hot melt was then discharged and allowed to cool and solidify.
   The melting behavior of the resultant carboxyl-functional polyurethane was investigated by means of DSC (differential scanning calorimetry, heating rate 10 K/min); the final temperature of the melting process was 90 °C.
c1) to c3): Examples 1b) to 1d) were repeated with the difference that instead of 210 g dodecanedioic acid 155 g dodecanedioic acid and 193 g of the polyurethane dicarboxylic acid of Example 2a) were used.
d1) to d3): Examples 1b) to 1d) were repeated with the difference that instead of 210 g dodecanedioic acid 155 g dodecanedioic acid and 154 g of the polyurethane carboxylic acid of Example 2b) were used.
None of the test specimen prepared in Examples 2 c1) to c3) and d1) to d3) showed a change after 10 days storage at room temperature.

## Claims

1. A powder clear coating composition with a resin solids content comprising at least one epoxy-functional (meth)acrylic copolymer (A) having an epoxy equivalent weight of 250 to 600 and a carboxyl-functional curing component (B) of dodecanedioic acid (B1) and at least one carboxyl-functional urethane component (B2) having a carboxyl number of 80 to 350 mg of KOH/g, wherein the epoxy groups of the epoxy-functional (meth)acrylic copolymer (A) are in a molar ratio to the carboxyl groups of the carboxyl-functional curing component (B) of 2.5:1 to 0.8:1 and wherein 30 to 75 % of the carboxyl groups provided by the carboxyl-functional curing component (B) are provided by the dodecanedioic acid (B1) and the remainder to make the total up to 100 % by the at least one carboxyl-functional urethane component (B2).

2. The powder clear coating composition of claim 1, wherein the resin solids content consists of the at least one epoxy-functional (meth)acrylic copolymer (A) and the carboxyl-functional curing component (B).

3. The powder clear coating composition of claim 1 or 2, wherein the weight ratio of the at least one epoxy-functional (meth)acrylic copolymer (A) to the carboxyl-functional curing component (B) amounts to 90:10 to 50:50.

4. The powder clear coating composition of any one of the preceding claims, wherein the at least one epoxy-functional (meth)acrylic copolymer (A) is a copolymer of glycidyl (meth)acrylate.

5. The powder clear coating composition of any one of the preceding claims, wherein the at least one carboxyl-functional urethane component (B2) is selected from the group consisting of carboxyl-functional urethane components (B2a) in the form of organic compounds with at least two urethane and at least two carboxyl groups per molecule, produced by the addition of one or more monohydroxycarboxylic acids onto di- or polyisocyanate and carboxyl-functional urethane components (B2b) in the form of carboxyl-functional polyurethanes.

6. The powder clear coating composition of claim 5, wherein the carboxyl-functional polyurethanes are produced by reacting polyisocyanate(s) and/or diisocyanate(s) with polyol(s) and carboxylic acid(s) with at least one group capable of addition with isocyanate.

7. The powder clear coating composition of claim 5, wherein the carboxyl-functional polyurethanes are produced by reacting polyol(s) with polyisocyanate(s) and/or diisocyanate(s) in excess and reacting the excess free isocyanate groups with one or more carboxylic acids with one group capable of addition with isocyanate.

8. The powder clear coating composition of claim 7, wherein the carboxylic acids with one group capable of addition with isocyanate are monohydroxycarboxylic acids.

9. The powder clear coating composition of claim 5, wherein the carboxyl-functional polyurethanes are produced by reacting polyisocyanate(s) and/or diisocyanates with polyol(s) in excess to obtain hydroxyl-functional polyurethanes and then to react the hydroxyl groups with cyclic carboxylic anhydride(s).

10. Process for the preparation of a clear coat layer on a substrate comprising the successive steps:
a) applying a powder clear coating composition of any one of the preceding claims onto a substrate to be clear coated, and
b) thermally curing the powder clear coat layer applied in step a).

11. The process of claim 10, wherein the clear coat layer is the outer clear coat layer of a base coat/clear coat two-layer coating.
